# EUROPEAN PATENT SPECIFICATION

(11) **EP 3 087 884 B1**
(45) Date of publication and mention of the grant of the patent: **28.03.2018**
(21) Application number: 15165211.2
(22) Date of filing: 27.04.2015
(51) Int. Cl.: A47J 43/044, A47J 43/07, A47J 27/00, A47J 36/02

(54) **FOOD PROCESSING APPLIANCE**
NAHRUNGSVERARBEITUNGSVORRICHTUNG
APPAREIL DE TRAITEMENT D'ALIMENTS

(43) Date of publication of application: 02.11.2016
(73) Proprietor: Electrolux Professional S.p.A., 33170 Pordenone (IT)
(72) Inventor: Tassan Mangina, Franco, I-33170 PORDENONE (IT); Camatta, Massimiliano, I-33170 PORDENONE (IT); Pin, Gilberto, I-33170 PORDENONE (IT); Fadelli, Marino, I-31014 Colle Umberto (TV) (IT)
(74) Representative: Electrolux Group Patents

(56) References cited:
- WO-A1-2015/040997
- US-A1- 2011 186 668

## Description

### Field of the invention

The present invention relates to food processing appliances or machines. In more detail, the present invention refers to appliances for processing foods, such as appliances for mixing, blending and/or kneading foods, both for domestic and professional use. More particularly, the present invention relates to a food mixer.

### Background of the invention

The sector of domestic and professional cooking comprises a large variety of food processing machines.

Among the food processing machines, mixing machines or mixers are widely used in professional and home cooking for their versatility. Indeed, mixers may be used for kneading, whipping, blending and grinding food ingredients to be processed.

In general, a mixer comprises a, usually removable, receptacle or bowl for storing the food ingredients to be processed, rotatable, and usually removable, tools (e.g., a kneading arm, cutting blades *etc.*) used for processing food ingredients that are driven by a (electric) motor and controlled by a control unit usually housed within a casing of the mixer. The casing of the mixer is generally suited for supporting the receptacle.

In the art, are known mixers comprising heating means arranged for heating food ingredients while they are processed by the mixers. Similarly, mixers known in the art comprise refrigerating means arranged for cooling food ingredients while they are processed by the mixers.

For example, US 2011/186668 discloses an electrically-driven kitchen machine, comprising a food mixer or a food processor and having a support platform for supporting a receptacle for foodstuffs to be mixed or otherwise processed. The machine has an electric motor used to drive mixing or processing tools disposed in the receptacle and a heater for heating the foodstuffs in the receptacle. In order to ensure that the temperature of the foodstuffs is accurately determined, the base of the receptacle consists of multiple layers, comprising a first metallic material, such as aluminium, having a relatively high thermal conductivity, sandwiched between outer and inner skins of a second metallic material of lower thermal conductivity than the first metallic material, and the machine is also provided with first and second probes, each protruding through the receptacle-supporting platform and urged upwardly to contact the inner skin and the first metallic material respectively. The second metallic material typically comprises stainless steel, and the heater typically comprises an induction heater, in which case the probes are constructed so as to resist absorption of heat from the energy field generated by the heater.

### Summary of invention

The Applicant has realized that the art do not provide a satisfactory solution for mixers able to combine an induction heating functionality with a refrigerating functionality for heating and refrigerating, respectively, foods and/or food ingredients being processed by a mixer.

Moreover, the Applicant has observed that prior art solutions fail in providing a support element for a receptacle, or bowl, suitable to comprise a heat exchanger adapted to refrigerate the foods and/or food ingredients contained in the bowl.

The Applicant has tackled the problem of devising an improved solution able to overcome the drawbacks of the prior art.

One or more aspects of the solution according to embodiments of the invention are set out in the independent claims, with advantageous features of the same solution that are indicated in the dependent claims.

An aspect of the solution according to one or more embodiments of the present invention relates to a food processing appliance for processing foods and/or food ingredients is proposed. The food processing appliance comprises a body having a component portion adapted to house at least part of the components that allow operating and controlling the food processing appliance, an arm portion comprising an actuating element adapted to actuate a food processing tool, and a bowl container adapted to contain part of a bowl for receiving the foods and/or food ingredients to be processed, the bowl container comprising an inductive heating element for heating the foods and/or food ingredients contained in the bowl. The bowl container further comprises: a thermally conductive portion adapted to come in contact with bowl; a heat-exchanger element coupled with the thermally conductive portion, and an electromagnetic transparent portion. The inductive heating element is provided beneath said bottom electromagnetic transparent portion.

In an embodiment of the invention, the thermally conductive portion is defined by a jacket delimiting an upper portion of a recess of the bowl container and an aperture thereof for the insertion of the bowl within the recess, wherein the heat-exchanger element is coupled with an external surface of the jacket and wherein the electromagnetic transparent portion is defined by a bottom element that delimits a lower portion of the recess of the bowl container which is adapted to receive at least partially the bowl.

In an embodiment of the invention, the bottom element is made of a material transparent to at least variable electromagnetic fields having a field frequency ranging from 10 kHz to 100kHz.

In an embodiment of the invention, the inductive heating element is coupled with an external surface of the bottom element opposite to an internal surface thereof, said internal surface of the bottom element facing the recess of the bowl container.

In an embodiment of the invention, said internal surface of the bottom element is shaped to receive a bottom of said bowl.

In an embodiment of the invention, the bottom element is made of glass-ceramic.

In an embodiment of the invention, the bottom element is made of polypropylene.

In an embodiment of the invention, the jacket is made of a diamagnetic material.

In an embodiment of the invention, the jacket is made of aluminum.

In an embodiment of the invention, an internal surface of the jacket opposite to the external surface thereof is shaped to be fitted at least partially by a sidewall of said bowl.

In an embodiment of the invention, said heat-exchanger element comprises a pipe wrapped around the external surface of the jacket, said pipe being an evaporator portion of a refrigerating system.

In an embodiment of the invention, the pipe is made of a diamagnetic but thermally conductive material.

In an embodiment of the invention, the pipe is made of copper.

In an embodiment of the invention, the external surface of the jacket comprises a spiral groove adapted to at least partly house the pipe wrapped around the external surface of the jacket.

In an embodiment of the invention, the bowl container further comprises a temperature sensor adapted to provide a temperature information referred to a temperature of the foods and/or food ingredients stored in the bowl.

In an embodiment of the invention, the temperature sensor comprises a sensing end adapted to directly contact the bowl when the latter is inserted in the recess of the bowl container.

In an embodiment of the invention, the bottom element comprises a bottom element aperture and the inductive coil comprises a coil aperture, the bottom element aperture and the coil aperture being aligned one with the other and being sized in such a way to house at least the sensing end of the temperature sensor, in order to ensure that the sensing end reaches and directly contacts the bottom of the bowl when the latter is inserted in the recess of the bowl container.

In an embodiment of the invention, the temperature sensor is coupled with the jacket in such a way that the sensing end substantially is flush with an internal surface of the jacket and faces the recess of the bowl container.

In an embodiment of the invention, the food processing appliance further comprises a moving element adapted to move the bowl container and the arm portion relative to one another from a loading position which allows an insertion of the bowl in the bowl container to an operating position which allows an effective interaction of the food processing tool with the foods and/or food ingredients contained in the bowl.

In an embodiment of the invention, the food processing appliance further comprises a stop part adapted to stop said relative movement of the bowl container and the arm portion when the bowl is inserted in the recess of the bowl container and the bowl container and the bowl are in the operating position which allows an effective interaction of the food processing tool with the foods and/or food ingredients contained in the bowl.

In an embodiment of the invention, the stop part comprises a stopper element, said stopper element being adapted to contact at least a portion a rim of the bowl when the latter is in the operating position within the bowl container.

In an embodiment of the invention, the stopper element is made of a resilient material for preventing damages to the rim of the bowl when the stopper element contacts the rim of the bowl.

In an embodiment of the invention, the food processing appliance further comprises a blocking system for blocking the bowl in the bowl container, the blocking system comprising two or more blocking elements provided on the side surface of the bowl container, each blocking element being adapted to engage with the bowl in a blocking configuration of the blocking system, the blocking system in the blocking configuration maintaining the bowl in contact with a surface of the recess of the bowl container.

In an embodiment of the invention, the at least two blocking elements each comprise a respective frame mounted to a side surface of the bowl container, a respective handle element rotatably coupled with the respective frame, and a respective engaging element rotatably coupled with the respective handle element.

In an embodiment of the invention, each one of the two or more blocking elements is adapted to engage with a respective one of two or more receiving elements provided on an outer surface of a sidewall of the bowl, the receiving elements each comprising a respective tab element protruding from the outer surface of the sidewall of the bowl, and wherein the engaging element of the at least two blocking elements each comprise a free end having a hooked shape adapted to engage with the tab elements of the receiving elements.

In an embodiment of the invention, the food processing appliance further comprises a bowl for receiving foods and/or food ingredients adapted to be inserted in the bowl container, the bowl comprising a bottom having an internal portion, a heat-diffusing layer adapted to diffuse received heat evenly in the bowl, and a ferromagnetic layer adapted to be heated by an electromagnetic field reaching the ferromagnetic layer, the heat-diffusing layer being coupled with the ferromagnetic layer for receiving heat therefrom and being coupled with the internal portion of the bottom of the bowl for diffusing heat thereto.

In an embodiment of the invention, heat-diffusing layer comprises a heat-diffusing layer aperture and the ferromagnetic layer comprises a ferromagnetic layer aperture that are aligned one with the other and with the bottom element aperture of the bottom element and the coil aperture of the inductive coil of the bowl container, and sized in such a way to house at least the sensing end of the temperature sensor in such a way that the sensing end is in contact with the internal portion of the bottom of the bowl when the latter is inserted in the recess of the bowl container.

### Brief description of the annexed drawings

These and other features and advantages of the present invention will be made apparent by the following description of some exemplary and non limitative embodiments thereof. For its better intelligibility, the following description should be read making reference to the attached drawings, wherein:
**Figure 1** is a schematic side view of a food processing appliance, or mixer, according to an embodiment of the present invention;
**Figure 2A** is a schematic cross-sectional side view of a bowl container of the mixer of **Figure 1** containing a bowl for food ingredients;
**Figure 2B** is a schematic cross-sectional side view of an alternative bowl container of the mixer of **Figure 1** according to an alternative embodiment of the present invention;
**Figures 3A** and **3B** are schematic perspective views of a blocking system for blocking a bowl within the bowl container of the mixer according to an embodiment of the present invention, and
**Figures 4A - 4C** are schematic cross-sectional side and front views of the mixer comprising a different blocking system for blocking a bowl within the bowl container of the mixer according to another embodiment of the present invention.

### Detailed description of preferred embodiments of the invention

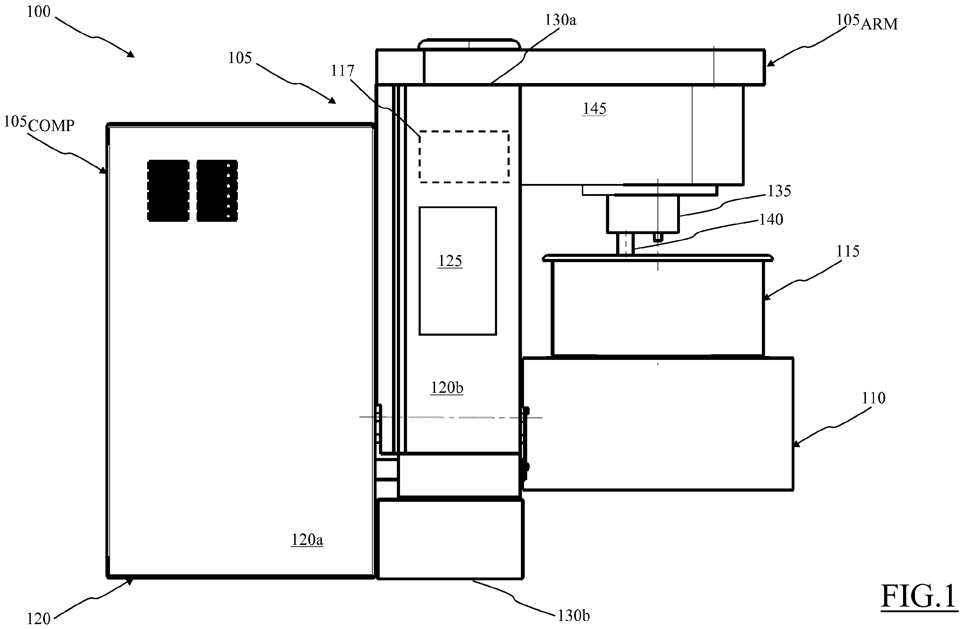

Referring now to the drawings, **Figure 1** is a schematic side view of a food processing appliance, or mixer **100,** according to an embodiment of the present invention.

The mixer **100** comprises a body **105** and a bowl container **110** adapted to contain a bowl **115** for housing foods and/or food ingredients (e.g., vegetables, wheat, sugar, salt, water, milk, eggs, *etc.)* to be processed by the mixer **100.**

Preferably, the body **105** of the mixer **100** comprises a component portion **105_{COMP}** and an arm portion **105_{ARM}.**

The component portion **105_{COMP}** of the body **105** of the mixer **100** houses at least part of the components that allow operating and controlling such operating of the mixer **100.** As a nonlimiting example, the component portion **105_{COMP}** comprises a electric motor (not shown) adapted to actuate movable parts of the mixer **100,** a part of a refrigerating system (not shown) for refrigerating the foods and/or food ingredients housed in the bowl **115** (as described in the following), a part of a heating system (not shown) for heating the foods and/or food ingredients housed in the bowl **115** (as described in the following), an electronic control unit **117** (schematically shown as a dashed block in **Figure 1**) for controlling the operation of the mixer **100** and a power circuitry (not shown) for (electrically) powering the aforementioned components.

Preferably, the component portion **105_{COMP}** of the mixer **100** comprises an electric cord (not shown) that may be coupled with the power grid for receiving electric power supply for powering electronic/electromechanical components of the mixer **100.**

Preferably, the component portion **105_{COMP}** comprises a casing **120** adapted to enclose all the aforementioned components comprised in the component portion **105_{COMP}.** Advantageously, the casing **120** may comprise a plurality of casing parts, such as for example the casing parts **120a** and **120b** in the example of **Figure 1****.**

A user interface **125** is provided preferably, although not strictly necessarily, on the casing **120** of the component portion **105_{COMP}.** Advantageously, the user interface **125** allows a user selecting operating procedures (e.g., a blending operation, a kneading operation *etc.)* or operating options (e.g., operating speed or rotation, operating temperature, *etc*.) of the mixer **100.**

The arm portion **105_{ARM}** of the body **105** of the mixer **100** preferably protrudes from a top end **130a** of the component portion **105_{COMP}** of the body **105** opposite to a standing end **130b** that is adapted to lie on a support surface, such as for example a tabletop (not shown), on which the mixer **100** may be positioned.

Preferably, although not strictly necessarily, the arm portion **105_{ARM}** protrudes substantially transversally from the component portion **105_{COMP}** of the body **105** of the mixer **100.**

The arm portion **105_{ARM}** comprises an actuating element, such as a planetary drive **135** that is arranged on the arm portion **105_{ARM}** in order to face the bowl **115** when the latter is placed within the bowl container **110** at least in operation.

The planetary drive **135** comprises a tool socket **140** that is adapted to engage with one or more (removable) food processing tools (not shown; e.g., a kneading arm, cutting blades *etc.).* For example, the food processing tools and the tool socket **140** may be formed in such a way that the food processing tools perform a bayonet mounting to the tool socket **140.**

The arm portion **105_{ARM}** further comprises transmission elements (not shown; e.g., gearings, transmission belt *etc.)* operatively coupling the planetary drive **135** with the motor comprised in the component portion **105_{COMP}** of the body **105** of the mixer **100.**

Preferably, the arm portion **105_{ARM}** further comprises an arm casing **145** adapted to enclose the aforementioned transmission elements.

The bowl container **110** is operatively coupled with the component portion **105_{COMP}** of the body **105** of the mixer **100.**

The bowl container **110** is coupled with the component portion **105_{COMP}** in such a way that the bowl **115,** when inserted in the bowl container **110,** is positioned beneath the planetary drive **135** of the arm portion **105_{ARM}** of the body **105** of the mixer **100.**

In one embodiment of the invention, the bowl container **110** is movable from a loading position, which allows a simple insertion of the bowl **115** in the bowl container **110,** to an operating position (shown in **Figure 1**), which allows an effective interaction of the food processing tool with the foods and/or food ingredients contained in the **bowl 115.**

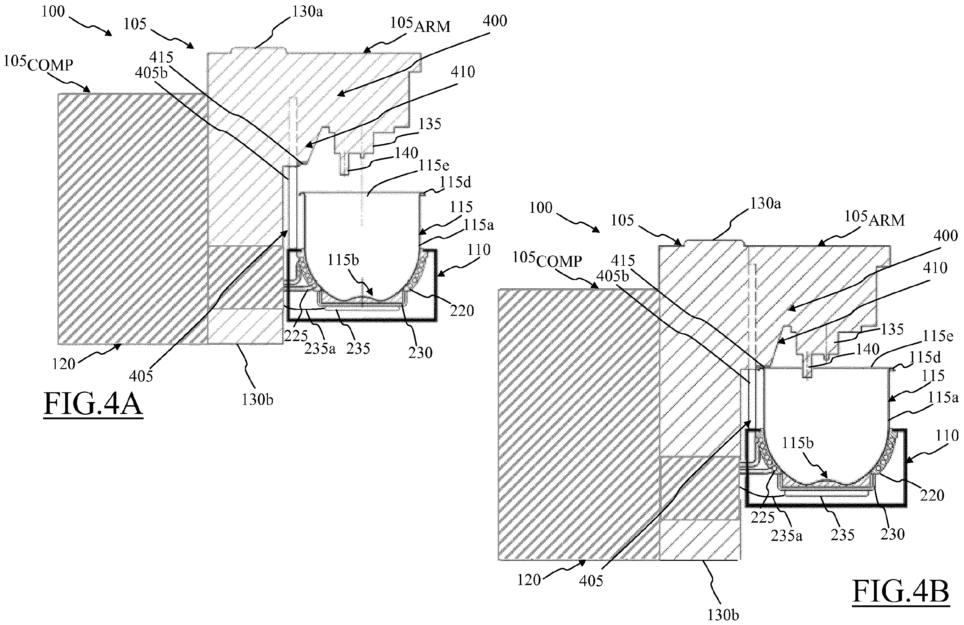

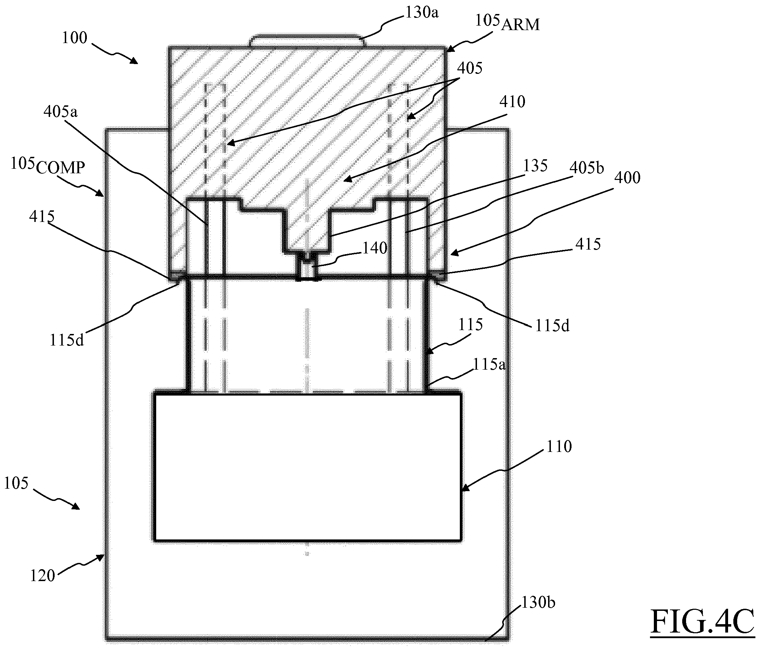

To this extent, the component portion **105_{COMP}** of the body **105** of the mixer **100** comprises a moving element, such as for example a lifting element (not visible in **Figure 1****,** and numbered **405** in **Figures 4A - 4C**) operatively coupled with the bowl container **110.** For example the lifting element **405** may comprise joining elements, such as a couple of beams (not visible in **Figure 1**, and numbered **405a** and **405b** in **Figures 4A - 4C****,** which slidable couple the bowl container **110** with the body **105** of the mixer **100.** The lifting system **405** further comprises a lifting element (not shown), such as for example a rack and pinion arrangement with the rack formed on the beams **405a** and **405b** and the pinion comprised either in the component portion **105_{COMP}** or in the arm portion **105_{ARM}** of the body **105** and actuated by the motor in the component portion **105_{COMP}.**

In alternative embodiments of the present invention (not shown), the bowl container is rigidly fixed to the body **105** of the mixer **100,** while the moving element comprises an hinging structure by means of which the arm portion **105_{ARM}** of the body **105** of the mixer **100** is hinged to the component portion **105_{COMP}** of the body **105** of the mixer **100** so as to be rotatable from a loading position to an operating position.

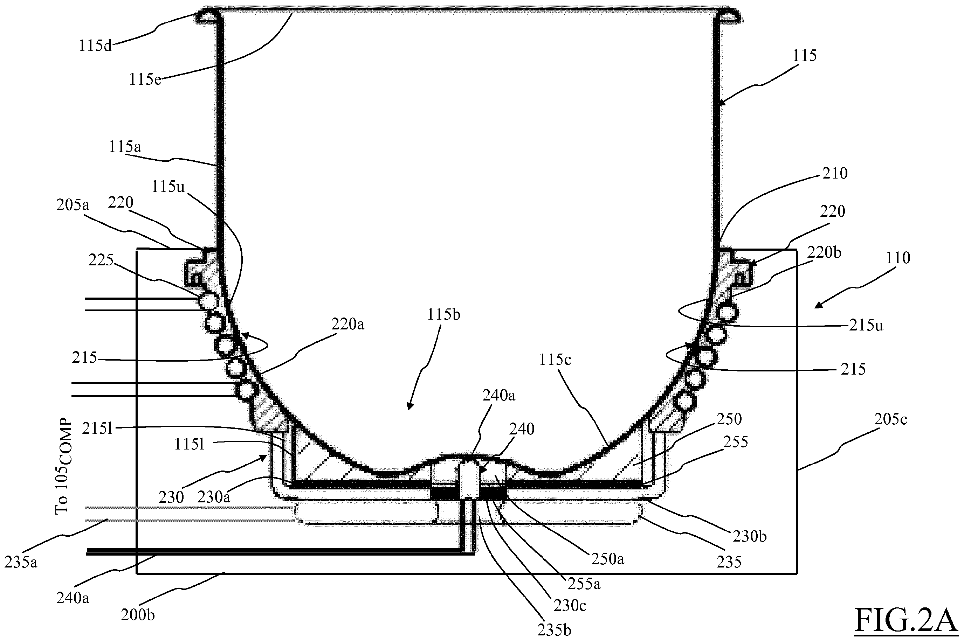

Considering now **Figure 2A****,** which is a schematic cross-sectional side view of the bowl container **110** of the mixer **100** containing the bowl **115** for food ingredients, the bowl container **110** and the bowl **115** according to an embodiment of the present invention are described.

The bowl container **110,** preferably, has a cylindrical shape with two opposite bases, a top base **205a** and bottom base **205b,** separated by a side surface **205c.**

On the top base **205a,** an aperture **210** is, preferably, provided. The aperture **210** opens on a cavity or recess **215** provided within the bowl container **110.** Both the aperture **210** and the recess **215** are shaped and sized in such a way to receive at least partially the **bowl 115.** Preferably the aperture **210** and the recess **215** are shaped and sized in such a way to allow a (at least partial) tight fit insertion of the bowl **115.**

The bowl container **110** comprises a jacket **220** that delimits the aperture **210** and an upper portion **215u** of the recess **215** of the bowl container **110.**

Therefore, an internal surface **220a** of the jacket **220** is shaped to be fitted at least partially by a sidewall **115a** of the bowl **115.** The fitting between the sidewall **115a** of the bowl **115** and the internal surface **220a** of the jacket **220** ensures a good thermal contact and thus a good heat transfer between jacket **220** and the **bowl 115.**

In the example of **Figure 2A****,** the jacket **220** has substantially a hollow frustoconical (or preferably semispherical) shape with a larger base thereof that delimits the aperture **210.**

The jacket **220** is preferably made of a good thermally conductive material such as aluminum.

A heat-exchanger element is provided and is (thermally) coupled with an external surface **220b** of the jacket **220.**

In the example of **Figure 2A****,** the heat-exchanger element comprises a refrigeration pipe **225** preferably made of good thermally conductive material such as for example copper and tightly wrapped around the external surface **220b** of the jacket **220.**

The pipe **225** is fluidly coupled with the part of a refrigerating system comprised in the component portion **105_{COMP}** of the body **105** of the mixer **100** thus forming a whole refrigerating system (e.g., in the form of a conventional refrigeration system using compressor technology). Preferably, the pipe **225** operates as an evaporator of the whole refrigerating system.

Preferably, although not strictly necessarily, the external surface **220b** of the jacket **220** is provided with a spiral groove adapted to at least partly house the pipe **225** wrapped around the external surface **220b** of the jacket **220.** Advantageously, the spiral groove increases the heat transfer surface between the jacket **220** and the pipe **225** by increasing a contact surface between the jacket **220** and the pipe **225.**

Alternatively, in other embodiments of the present invention (not shown), the pipe **225** may be provided completely drowned (i.e. embedded) inside the jacket **220.**

The bowl container **110** further comprises a bottom element **230** that delimits a lower portion **215l** (substantially a bottom) of the recess **215.**

Preferably, the bottom element **230** has a cup-like shape.

The bottom element **230** is preferably made of an insulating material able to withstand steep temperatures (e.g., in the order of the hundredth of Celsius degrees) reached by the bowl 115 during the operation of the mixer **100.**

More preferably, bottom element **230** is made of a material substantially neutral, i.e. substantially transparent, to electromagnetic fields. With the wording 'material substantially neutral to electromagnetic fields' or 'material substantially transparent to electromagnetic fields' it is meant materials that absorbs a limited, i.e. negligible, amount of energy associated with an electromagnetic field at least in the range of frequencies between 10 kHz and 100 kHz, or at least associated with a magnetic field of such an electromagnetic field extending through the material. In other words, the material substantially transparent to electromagnetic fields according to the present disclosure only slightly attenuates an intensity of a magnetic field of such an electromagnetic field extending through the material

For example, a material substantially transparent to electromagnetic fields absorbs an amount of energy associated with an electromagnetic field at least in the range of frequencies between 10 kHz and 100 kHz, equal to, or lower than, 20%, more preferably equal to, or lower than, 15% of the energy associated with such an electromagnetic field.

Examples of materials for the bottom element **230** comprise suitable polymers such as for example polypropylene or suitable alternative materials, for example polycrystalline materials such as glass-ceramic.

The bottom element **230** is coupled with a smaller base of the jacket **220** (i.e., the base facing towards the bottom base **205b** of the bowl container **110**).

For example, the bottom element **230** may be coupled with the jacket **220** by gluing the former to the latter. Alternatively, the bottom element **230** may be overmoulded to the jacket **220.** As a further alternative, the bottom element **230** and the jacket **220** may both be provided with corresponding treads in such a way to allow screwing the bottom element **230** and the jacket **220** together. As a yet further alternative or in addition, a sealing gasket may be provided between the bottom element **230** and the jacket **220** in such a way to prevent seepage of fluids towards the induction element.

Preferably, bottom element **230** and the jacket **220** delimit the whole recess **215** of the bowl container **110.**

Advantageously, an internal surface **230a** of the bottom element **230** may be shaped to receive a bottom **115b** of the **bowl 115.**

An external surface **230b** of the bottom element **230** (opposite to the internal surface **230a**) is coupled with a heating element. The heating element is operatively coupled with the part of a heating system comprised in the component portion **105_{COMP}** of the body **105** of the mixer **100**, thus forming a whole heating system.

Preferably, the heating element is an inductive heating element, such as for example an inductive coil **235** (and therefore the whole heating system is an inductive heating system). In this case the inductive coil **235** is coupled with the part of a heating system comprised in the component portion **105_{COMP}** of the body **105** of the mixer **100** by means of a suitable wiring **235a.**

The inductive coil **235** preferably generates an electromagnetic field that is variable with a field frequency substantially equal to an electric current frequency of a powering current provided to the inductive coil **235.** Generally, the electric current frequency of the powering current varies within an operating frequency range, for example the electric current frequency may vary between 10 kHz and 100 kHz; correspondingly, the electromagnetic field generated by the electric current oscillates at frequencies between 10 kHz and 100 kHz.

The material of the bottom element **230** is selected in such a way to be substantially transparent to the electromagnetic field (as previously described), or at least transparent to the variable magnetic field of such a variable electromagnetic field, having a field frequency comprised in the operating frequency range (e.g., 10 kHz - 100 kHz).

It should be noted that the bottom element **230** avoids contacts between the inductive coil **235** and the bottom **115b** of the **bowl 115** when the latter is inserted in the recess **215.** Therefore, the bottom element **230** protects the inductive coil **235** from damages and mechanical wear out that could follow by a prolonged and/or repeated contact with the bottom **115b** of the bowl **115** while allowing the electromagnetic field generated by the inductive coil **235** reaching the bottom **115b** of the bowl **115** substantially without any attenuations.

Advantageously, the bowl container **110** further comprises a sensor element, such as for example a temperature sensor **240.** The temperature sensor **240** is adapted to provide a temperature information referred to a temperature of the foods and/or food ingredients in the bowl **115.**

Preferably, although not strictly necessarily, the temperature sensor **240** is provided with a sensing end **240a** adapted to directly contact the bottom **115b** of the bowl **115** when the latter is inserted in the recess **215** of the bowl container **110.**

To this extent, in the example of **Figure 2A****,** both the bottom element **230** and the inductive coil **235** comprise apertures **230c** and **235b,** respectively.

The apertures **230c** and **235b** are aligned one with the other and are sized in such a way to house at least the sensing end **240a** of the temperature sensor **240** ensuring that the sensing end **240a** reaches and directly contacts the bottom **115b** of the bowl **115** when the latter is inserted in the recess **215** of the bowl container **110.**

The temperature sensor **240** is operatively coupled with the control unit **117** comprised in the component portion **105_{COMP}** of the body **105** of the mixer **100** by means of a suitable wiring **240b.** Advantageously, the temperature sensor **240** is adapted to provide a temperature information to the control unit **117** (e.g., a voltage difference related to a temperature of the bowl **115** such as for example in case that he temperature sensor **240** is a thermocouple).

Preferably, the sidewalls **115a** and an internal portion **115c** of the bottom **115b** of the bowl **115** are formed as one (seamless) piece element. Even more preferably, the sidewalls **115a** and an internal portion **115c** of the bottom **115b** of the bowl **115** are made of food compliant and thermally conductive material. For example, the sidewalls **115a** and an internal portion **115c** of the bottom **115b** of the bowl **115** are manufactured as a single-piece element. Preferably, the bowl **115** is made of a metal material such as for example stainless steel, e.g. AISI304.

Advantageously, the bottom **115b** of the bowl **115** comprises a heat-diffusing layer **250** made of a good thermally conductive material, such as for example a layer of aluminum or ferromagnetic steel, e.g. AISI430. The heat-diffusing layer **250** is coupled with the internal portion **115c** of the bottom **115b** of the bowl **115.**

The heat-diffusing layer **250** is adapted to diffuse substantially evenly in the bowl **115** (or at least in the bottom **115b** thereof) the heat provided by the inductive coil **235** (as described in the following).

If the heat-diffusing layer **250** is made of a diamagnetic material such as for example aluminum, the bottom **115b** of the bowl **115** is further provided with a ferromagnetic layer **255** made of a ferromagnetic material, such as for example ferromagnetic steel, e.g. AISI430.

The ferromagnetic layer **255** is (thermally) coupled with the heat-diffusing layer **250.** Preferably, the ferromagnetic layer **255** is coupled with a surface of the heat-diffusing layer **250** opposite to another surface of the heat-diffusing layer **250** coupled with the internal portion **115c** of the bottom **115b** of the bowl **115.**

Preferably, a thickness *th* of the heat-diffusing layer **250** is substantially greater than a thickness *tf* of the ferromagnetic layer **255.**

For example, thickness *th* of the heat-diffusing layer **250** may vary between 5 mm and 30 mm, such as for example 15 mm, while the thickness *tf* of the ferromagnetic layer **255** may vary between 0, 5 mm and 2 mm, such as for example 1 mm.

Preferably, although not strictly necessarily, the heat-diffusing layer **250** and the ferromagnetic layer **255** comprise respective apertures **250a** and **255a** that are aligned one with the other and with the apertures **230c** and **235b** when the **bowl 115** is housed in the bowl container **110.** Advantageously, the apertures **250a** and **255a** are sized in such a way to house at least the sensing end **240a** of the temperature sensor **240** in such a way that the sensing end is in contact with the internal portion **115c** of the bottom **115b** of the bowl **115.** With such an arrangement, the sensing end **240a** of the temperature sensor **240** is as close as possible to the foods and/or food ingredients contained in the bowl **115** and thus the temperature information provided by the temperature sensor **240** results to be a highly reliable indication of the temperature of the foods and/or food ingredients contained in the bowl **115.**

Opposite to the bottom **115b** of the bowl **115** a rim **115d** of the sidewall **115a** of the bowl **115** delimits an aperture **115e.**

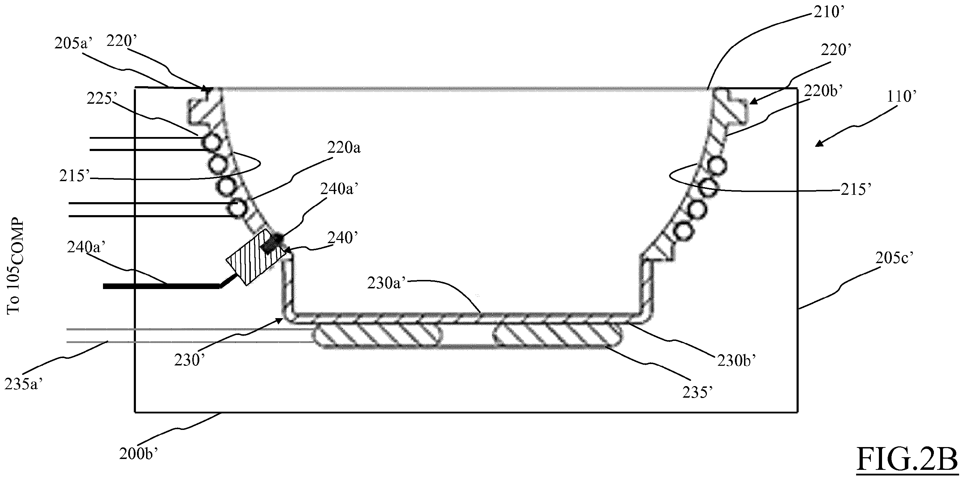

Turning now to **Figure 2B****,** it is a schematic cross-sectional side view of an alternative bowl container **110'** of the mixer **100** according to an embodiment of the present invention.

The bowl container **110'** differs from the bowl container **110** just described in what follows wherein similar elements are denoted by similar reference and their description is not repeated for sake of conciseness.

In the bowl container **110'** a temperature sensor **240'** is provided with a sensing end **240a'** adapted to directly contact a side surface of the sidewall **115a** of the bowl **115** when the latter is inserted in the recess **215'** of the bowl container **110'.**

Preferably, although not strictly necessarily, the temperature sensor **240'** is coupled with the jacket **220'** in such a way that the sensing end **240a'** substantially flushes with the internal surface **220a'** of the jacket **220'** and faces the recess **215'** of the bowl container **110'.**

For example, a through hole may be provided in the jacket **220'** with a size and shape adapted to house the temperature sensor **240'.**

Moreover, since the temperature sensor **240'** is now coupled with the jacket **220'** the bottom element **230'** does not comprise an aperture as the aperture **230c** of the bottom element **230** previously described. Conversely, the bottom element **230'** has continuous internal surface **230a** and external surface **230b.**

It should be noted that, generally, the working of the material of the jacket **220',** e.g. aluminum, (i.e. the provision of the through hole in the jacket **220'**) results to be simpler than a working of the material of the bottom element **230',** e.g. glass-ceramic, (i.e. the provision of the aperture **230c** in the bottom element **230**). Thus, the bowl container **110'** may be manufactured in a manner faster and less prone to faults (e.g. cracks in the bottom element **230'** caused by the working thereof) with respect to the bowl container **110** previously described.

In addition, the position of the temperature sensor **240'** spaced apart from the inductive coil **235'** reduces to a negligible extent any interferences of the electromagnetic field generated by the inductive coil **235'** (during operation) on the temperature sensor **240'** ensuring a more reliable temperature information.

Having described the structure of the mixer **100** according to an embodiment of the present invention, an operation of the mixer **100** will now be discussed.

Generally, a user (not shown) provides foods and/or food ingredients in the bowl **115,** inserts the bowl **115** in the bowl container **110** and couples a selected food processing tool with the tool socket **140.**

Then, the user sets, or selects from a list, a food processing operation through the user interface **125.**

Preferably, the user may set a temperature at which the food processing has to be carried out. More preferably, the user may set a sequence of temperatures to be used during various phase of the food processing operation.

Once the setting of the food processing operation is completed, the user starts the operation of the mixer **100** (e.g., by pushing a 'start' pushbutton of the user interface **125**).

Accordingly, the bowl container **110** and the **bowl 115** contained therein are positioned in a working operation, e.g. the bowl container **110** and the bowl **115** are raised by the lifting element **405** in such a way that the food processing tool is inserted into the bowl **115** (i.e., through the aperture **115e**).

The planetary drive **135** is generally actuated by the control unit **117** in the component portion **105_{COMP}** according to the user settings in order to operate the food processing tool.

Moreover, the refrigerating system and/or the heating system may be actuated according to the user settings in order to refrigerate and/or heat, respectively, the foods and/or food ingredients housed in the bowl **115** (according to the user-specified food processing operation settings).

When the foods and/or food ingredients housed in the bowl **115** are to be refrigerated the refrigerating system is actuated. Accordingly, the pipe **225,** which operates as the evaporator portion of the refrigerating system, removes heat from the jacket **220** and, by thermal conduction, from the bowl **115,** which is in contact with the jacket **220,** and from the foods and/or food ingredients housed in the bowl **115** that are thus refrigerated.

It should be noted that the jacket **220,** with the pipe **225** wrapped on its outer surface **220b,** ensures a even heat exchange (i.e., refrigeration) of the bowl **115** and of the foods and/or food ingredients therein, thanks to the wide contact surface between the jacket **220** and the bowl **115** due to the internal surface **220a** of the jacket **220** designed to be fitted by the bowl **115.**

Conversely, when the foods and/or food ingredients housed in the bowl **115** are to be heated, the heating system is actuated. Accordingly, the inductive coil **235** is energized and generates an electromagnetic field. The magnetic field comprised in the electromagnetic field induces eddy currents in the heat-diffusing layer **250** (if made of a ferromagnetic material) or in the ferromagnetic layer **255** (provided coupled to a nonmagnetic heat-diffusing layer **250**) of the **bowl 115.** The eddy currents generate heat by Joule heating in the heat-diffusing layer **250** (if made of a ferromagnetic material) or in the ferromagnetic layer **255** (provided coupled to a nonmagnetic heat-diffusing layer **250**) of the bowl **115.**

The heat generated at the heat-diffusing layer **250** (if made of a ferromagnetic material) or at the ferromagnetic layer **255** (provided coupled to a nonmagnetic heat-diffusing layer **250**) of the bowl **115** is evenly diffused by the heat-diffusing layer **250** throughout the bottom **115b** of the bowl **115** and, therefore, the foods and/or food ingredients housed in the bowl **115** are effectively heated by thermal conduction, being in contact with the internal portion **115c** of the bottom **115b** of the bowl **115.**

It should be noted that, by making the jacket **220** and the pipe **225** of a diamagnetic material, such as for example aluminum for the jacket **220** and copper for the pipe **225,** it is avoided that in the jacket **220** and the pipe **225** the magnetic field produced by the inductive coil **235** induces eddy currents. Therefore, the jacket **220** and the pipe **225** made of diamagnetic materials do not heat even if reached by the magnetic field produced by the inductive coil **235.**

Advantageously, the control unit **117** adjusts the operation of the refrigerating system and/or of the heating system according to the temperature information received (e.g., continuously or periodically) from the temperature sensor **240** in order to ensure that the foods and/or food ingredients in the bowl **115** are at the desired temperature. In other words, the temperature information provided by the temperature sensor **240** allows the control unit **117** implementing a temperature feedback loop that ensures a precise control of the temperature of the foods and/or food ingredients in the bowl **115** during the food processing operation.

The mixer **100** according to the present invention is thus adapted to refrigerate and/or heat foods and/or food ingredients provided in the bowl **115** in addition to the food processing performed by the food processing tool mounted to the tool socket **140.**

Advantageously, the foods and/or food ingredients in the bowl **115** may be cooled or frozen even while being processed by the food processing tool (e.g., for ice creams preparation).

Similarly, the foods and/or food ingredients in the bowl **115** may be warmed or cooked even while being processed by the food processing tool (e.g., for hot creams preparation).

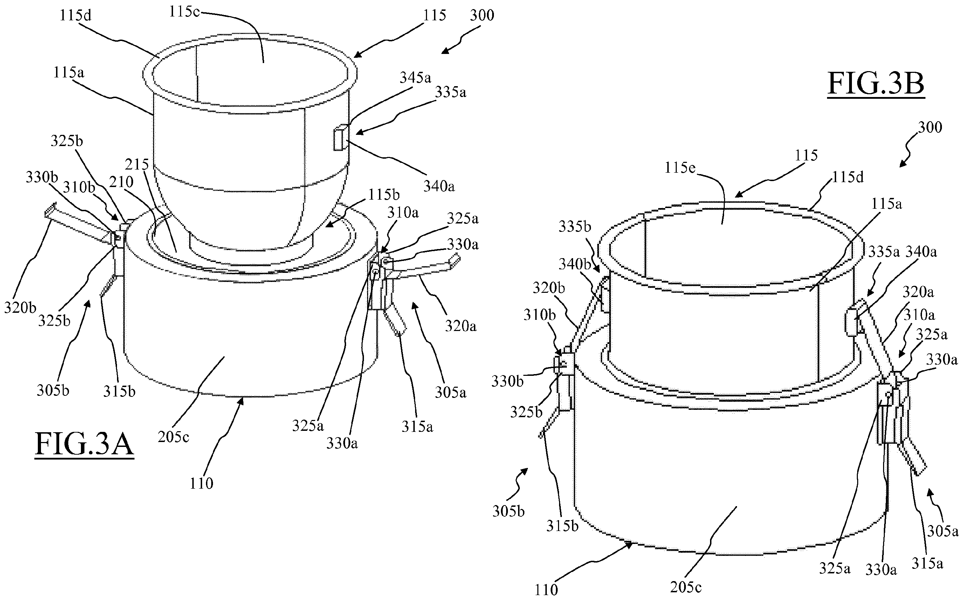

A blocking system **300** for blocking the bowl **115** to the bowl container **110** of the mixer **100** according to an embodiment of the present invention will now be described by making reference to **Figures 3A** and **3B** that are schematic perspective views thereof.

In the embodiment according to the present invention, the blocking system **300** comprises at least a pair of (flip) blocking elements **305a** and **305b,** which are preferably structured substantially as flip-buckles and are preferably located at opposite sides of the bowl (if two), or evenly distributed on it (if more than two).

Preferably, the blocking elements **305a** and **305b** each comprise a respective frame **310a** and **310b** mounted to the side surface **205c** of the bowl container **110,** and a respective handle element **315a** and **315b** rotatably coupled with the frame **310a** and **310b,** respectively, and a respective engaging element **320a** and **320b** rotatably coupled with the handle element **315a** and **315b,** respectively.

For example, the frames **310a** and **310b** each comprise two wall sections **325a** and **325b,** respectively, protruding from the side surface **205c** of the bowl container **110** (preferably, substantially transversally thereto). Preferably, the frames **310a** and **310b** are provided on the side surface **205c** of the bowl container **110** substantially at the edge between the side surface **205c** and the top base **205a.**

The handle elements **315a** and **315b** are rotatably mounted to the two wall sections **325a** and **325b,** respectively, of the respective frame structure **310a** and **310b** by means of hinging pins **330a** and **330b,** respectively, fitted in two faced holes located on said two walls sections **325a** and **325b.**

According to this embodiment, the engaging elements **320a** and **320b** are rotatably mounted to the respective handle elements **315a** and **315b,** for example by means of a further hinging pin (not visible in the figures) fitted in two faced holes located on two faced wall sections of each handle elements **315a** and **315b,** in such a way that a rotation axis of the handle elements **315a** and **315b** with respect to the frames **310a** and **310b,** respectively, are parallel to a rotation axis of the engaging elements **320a** and **320b,** respectively, with respect to the handle elements **315a** and **315b.**

In addition, the bowl **115** comprises, on an outer surface of the sidewall **115a,** at least a pair of receiving elements **335a** and **335b** adapted to engage with the engaging elements **320a** and **320b.**

For example, the receiving elements **335a** and **335b** each comprises a tab element **340a** and **340b,** respectively, protruding from the outer surface of the sidewall **115a** of the bowl **115.** Preferably, the tab elements **340a** and **340b** each defines an eyelet **345a** and **345b,** respectively, with the sidewall **115a.**

The eyelets **345a** and **345b** are adapted to receive a free end of the engaging elements **320a** and **320b.** Preferably, the free ends of the engaging elements **320a** and **320b** have a hooked shape adapted to engage with the tab elements **340a** and **340b** and the eyelets **345a** and **345b** are adapted to receive a bent portion of the engaging elements **320a** and **320b.**

In order to block the bowl **115** in operating position, once inserted in the bowl container **110,** the bowl **115** is positioned inside the recess **215** of the bowl container **110** in such a way that each receiving elements **335a** and **335b** of the bowl **115** is aligned with a respective one of the blocking elements **305a** and **305b.** With the term 'aligned' it is meant that each receiving elements **335a** and **335b** substantially shares a symmetry axis with one of the flip blocking elements **305a** and **305b.**

In a blocked configuration (**Figures 3B**), the handle elements **315a** and **315b** are in a position substantially parallel to the side surface **205c** of the bowl container **110,** and the free end of the engaging elements **320a** and **320b** engage with a respective one of the receiving elements **335a** and **335b** (i.e., with the hooked free ends of the engaging elements **320a** and **320b** that are received in the eyelets **345a** and **345b**).

In the blocked configuration, the blocking elements **305a** and **305b** maintain the bowl **115** in firm contact with a surface of the recess **215** (i.e., with the jacket **220** and with the bottom element **230**) of the bowl container **110.** Therefore, the blocking system ensures that the **bowl 115** is firmly coupled with the bowl container **110** during the food processing operation, even though the food processing operation may exert strong mechanical stresses on the bowl **115** (e.g., in case of the processing of a heavy dough).

In order to release the bowl **110**, the blocking elements **305a** and **305b** are brought to the unlocked configuration by rotating the handle elements **315a** and **315b** around the respective hinging pins **330a** and **330b.** As the handle elements **315a** and **315b** rotate around the respective hinging pins **330a** and **330b,** the position of the further hinging pins translates with respect to the bowl **115** and the bowl container **110,** until the engaging elements **320a** and **320b** disengage the receiving elements **335a** and **335b,** respectively. Once the blocking elements **305a** and **305b** have been unlocked, the bowl **115** may be easily removed from the bowl container **110.**

It should be noted, that the blocking system **300** just described is independent from the typology of heating and /or refrigerating system implemented in the bowl container **110.**

In alternative embodiment of the present invention, the receiving elements **335a** and **335b** may be omitted and the engaging elements **320a** and **320b** may be adapted to engage with the rim **115d** of the bowl **115.**

A different blocking system **400** for blocking the bowl **115** to the bowl container **110** of the mixer **100** according to an embodiment of the present invention will be now described by making reference to **Figures 4A - 4C** that are schematic cross-sectional side views and front view thereof.

In the embodiment of the present invention, the mixer **100** further comprises a stop part **410** adapted to intercept the bowl **115** when the latter is in the operating position.

For example the stop part **410** is comprised in the arm portion **105_{ARM}** adjacent to the component portion **105_{COMP}** of the body **105** of the mixer **100** (or, *viceversa,* the stop part **410** is comprised in the component portion **105_{COMP}** adjacent to the arm portion **105_{ARM}** of the body **105** of the mixer **100**) and adjacent to the lifting element **405.**

Preferably, the stop part **410** comprises a stopper element **415** provided on the stop part **410** in such a way to face the bowl **115** when the latter is inserted in the bowl container **110.**

The stopper element **415** is adapted to contact at least a portion the rim **115d** of the bowl **115** when the latter is in its operating position. Preferably, the stopper element **415** is made of a resilient material (such as for example rubber or plastic) for preventing damages to the rim **115d** of the bowl **115** due to contact with the latter.

In detail, when the bowl container **110,** in which the bowl **115** is inserted, is lifted by the lifting element **405** towards the arm portion **105_{ARM}** of the body **105** in the operating position, a portion of the rim **115d** of the bowl **115** is pressed, and maintained pressed for the whole food processing operation, against the stopper element **415** of the stop part **410.**

Advantageously, the portion of the rim **115d** of the bowl **115** pressed against the stopper element **415** of the stop part **410** ensures that the bowl **115** is firmly coupled with the bowl container **110,** particularly, during the food processing operation, even though the food processing operation may exert strong mechanical stresses on the bowl **115** (e.g., in case of the processing of a heavy dough).

It should be noted, that the blocking system just described is independent from the typology of heating and /or refrigerating system implemented in the bowl container **110.**

Naturally, in order to satisfy local and specific requirements, a person skilled in the art may apply to the solution described above many logical and/or physical modifications and alterations.

For example, in a further embodiment of the present invention (not shown), the heat-exchanger element may comprise one or more Peltier cells, the refrigerating system thus being an electronic refrigerating system.

In another embodiment of the present invention (not shown), the bowl and the bowl container may be a single structure either provided as a single piece element or provided as two distinct elements permanently coupled together.

In yet another embodiment of the present invention (not shown), both the blocking system **300** and the blocking system **400** may be implemented in order to attain an enhanced stability for the coupling between the bowl **115** and the bowl container **110.**

In a still further embodiment of the present invention, the heating system and the refrigerating system may be comprised in their entirety within the bowl container.

## Claims

1. A food processing appliance (**100**) for processing foods and/or food ingredients, the food processing appliance comprising a body (**105**) having a component portion (**105_{COMP}**) adapted to house at least part of the components that allow operating and controlling the food processing appliance (**100**), an arm portion (**105_{ARM}**) comprising an actuating element (**135**) adapted to actuate a food processing tool, and a bowl container (**110**; **110'**) adapted to contain part of a bowl (**115**) for receiving the foods and/or food ingredients to be processed, the bowl container (**110**, **110'**) comprising an inductive heating element (**235**; **235'**) for heating the foods and/or food ingredients contained in the bowl (**115**),
**characterized in that**
the bowl container (**110; 110'**) further comprises:
a thermally conductive portion (**220; 220'**) adapted to come in contact with bowl (**115**);
a heat-exchanger element (**225; 225'**) coupled with the thermally conductive portion (**220**; **220'**), and
an electromagnetic transparent portion,(**230; 230'**),
and **in that**
the inductive heating element (**235; 235'**) is provided beneath said bottom electromagnetic transparent portion (**230; 230'**).

2. The food processing appliance (**100**) according to claim 1, wherein the thermally conductive portion is defined by a jacket (**220; 220'**) delimiting an upper portion (**215u; 215u'**) of a recess (**215; 215'**) of the bowl container (**110; 110'**) and an aperture (**210; 210'**) thereof for the insertion of the bowl (**115**) within the recess (**215; 215'**), wherein the heat-exchanger element (**225**; **225'**) is coupled with an external surface (**220b; 220b**) of the jacket (**220; 220'**) and wherein the electromagnetic transparent portion is defined by a bottom element (**230; 230'**) that delimits a lower portion (**2151; 2151'**) of the recess (**215; 215'**) of the bowl container (**110; 110'**) which is adapted to receive at least partially the bowl (**115**)**.**

3. The food processing appliance (**100**) according to claim 1, wherein the bottom element (**230; 230'**) is made of a material transparent to at least variable electromagnetic fields having a field frequency ranging from 10 kHz to 100kHz.

4. The food processing appliance (**100**) according to claim 1 or 2, wherein the inductive heating element (**235; 235'**) is coupled with an external surface (**230b; 230b'**) of the bottom element (**230; 230'**) opposite to an internal surface (**230a; 230a'**) thereof, said internal surface (**230a; 230a'**) of the bottom element (**230; 230'**) facing the recess (**215; 215'**) of the bowl container (**110; 110'**).

5. The food processing appliance (**100**) according to any one of the preceding claims, wherein an internal surface (**220a; 220a'**) of the jacket (**220; 220'**) opposite to the external surface (**220b; 220b'**) thereof is shaped to be fitted at least partially by a sidewall (**115a**) of said bowl (**115**).

6. The food processing appliance (**100**) according to any one of the preceding claims, wherein said heat-exchanger element (**225; 225'**) comprises a pipe (**225; 225'**) wrapped around the external surface (**220b; 220b'**) of the jacket (**220; 220'**), said pipe (**225; 225'**) being an evaporator portion of a refrigerating system.

7. The food processing appliance (**100**) according to any one of the preceding claims, wherein the bowl container (**110; 110'**) further comprises a temperature sensor (**240; 240'**) adapted to provide a temperature information referred to a temperature of the foods and/or food ingredients stored in the bowl (**115**).

8. The food processing appliance (**100**) according to claim 7, wherein the temperature sensor (**240; 240'**) comprises a sensing end (**240a; 240a'**) adapted to directly contact the bowl (**115**) when the latter is inserted in the recess (**215; 215'**) of the bowl container (**110; 110'**).

9. The food processing appliance (**100**) according to claim 7, wherein the temperature sensor (**240'**) is coupled with the jacket (**220'**) in such a way that the sensing end (**240a'**) substantially is flush with an internal surface (**220a'**) of the jacket (**220'**) and faces the recess (**215'**) of the bowl container (**110'**).

10. The food processing appliance (**100**) according to any one of the preceding claims, further comprising a moving element (**405**) adapted to move the bowl container (110; 110') and the arm portion (**105_{ARM}**) relative to one another from a loading position which allows an insertion of the bowl (**115**) in the bowl container (**110**) to an operating position which allows an effective interaction of the food processing tool with the foods and/or food ingredients contained in the bowl (**115**).

11. The food processing appliance (**100**) according to claim 9, wherein the food processing appliance (**100**) further comprises a stop part (**410**) adapted to stop said relative movement of the bowl container and the arm portion when the bowl (**115**) is inserted in the recess (**215**; **215**) of the bowl container (**110; 110'**) and the bowl container (**110; 110'**) and the bowl (**115**) are in the operating position which allows an effective interaction of the food processing tool with the foods and/or food ingredients contained in the bowl (**115**).

12. The food processing appliance (**100**) according to claim 11, wherein the stop part (**410**) comprises a stopper element (**415**), said stopper element being adapted to contact at least a portion a rim (**115d**) of the bowl (**115**) when the latter is in the operating position within the bowl container (**110; 110'**).

13. The food processing appliance (**100**) according to claim 12, wherein the stopper element (415) is made of a resilient material for preventing damages to the rim (**115d**) of the bowl (**115**) when the stopper element (**415**) contacts the rim (**115d**) of the bowl (**115**).

14. The food processing appliance (**100**) according to any one of the preceding claims, further comprising a blocking system (**300**) for blocking the bowl (**115**) in the bowl container (**110**; **110'**), the blocking system (**300**) comprising two or more blocking elements (**305a, 305b**) provided on the side surface (**205c; 205c'**) of the bowl container (**110; 110'**), each blocking element (**305a, 305b**) being adapted to engage with the bowl (**115**) in a blocking configuration of the blocking system (**300**), the blocking system (**300**) in the blocking configuration maintaining the bowl (**115**) in contact with a surface of the recess (**215; 215'**) of the bowl container (**110; 110'**).

15. The food processing appliance (**100**) according to claim 14, wherein the at least two blocking elements (**305a, 305b**) each comprise a respective frame (**310a, 310b**) mounted to a side surface (**205c; 205c'**) of the bowl container (**110; 110'**), a respective handle element (**315a, 315b**) rotatably coupled with the respective frame (**310a, 310b**), and a respective engaging element (**320a, 320b**) rotatably coupled with the respective handle element (**315a, 315b**).

## Patentansprüche

1. Nahrungsmittelverarbeitungsvorrichtung (100) zum Verarbeiten von Nahrungsmitteln und/oder Nahrungsmittelzutaten, wobei die Nahrungsmittelverarbeitungsvorrichtung umfasst: einen Körper (105), der einen Komponentenabschnitt (105_{COMP}) aufweist, der gestaltet ist, um mindestens einen Teil der Komponenten zu beherbergen, die ein Betreiben und ein Steuern der Nahrungsmittelverarbeitungsvorrichtung (100) erlauben, einen Armabschnitt (105_{ARM}), der ein Betätigungselement (135) umfasst, das gestaltet ist, um ein Nahrungsmittelverarbeitungswerkzeug zu betätigen, und einen Schüsselbehälter (110; 110'), der gestaltet ist, einen Teil einer Schüssel (115) zu enthalten, um die zu verarbeitenden Nahrungsmittel und/oder Nahrungsmittelzutaten aufzunehmen, wobei der Schüsselbehälter (110, 110') ein induktives Heizelement (235; 235') zum Erwärmen der Nahrungsmittel und/oder Nahrungsmittelzutaten umfasst, die in der Schüssel (115) enthalten sind,
**dadurch gekennzeichnet, dass** der Schüsselbehälter (110, 110) außerdem umfasst:
einen wärmeleitfähigen Abschnitt (220; 220'), der gestaltet ist, in einen Kontakt mit der Schüssel (115) zu treten:
ein Wärmeübertragerelement (225; 225'), das mit dem wärmeleitfähigen Abschnitt (220; 220') verbunden ist, und
einen elektromagnetisch transparenten Abschnitt (230; 230'),
und dadurch, dass
das induktive Heizelement (235; 235') unter dem elektromagnetisch transparenten Bodenabschnitt (230; 230') bereitgestellt wird.

2. Nahrungsmittelverarbeitungsvorrichtung (100) nach Anspruch 1, wobei der wärmeleitfähige Abschnitt durch einen Außenmantel (220; 220') definiert wird, der einen oberen Abschnitt (215u; 215u') einer Vertiefung (215; 215') des Schüsselbehälters (110; 110') und eine Öffnung (210; 210') desselben für das Einsetzen der Schüssel (115) in die Vertiefung (215; 215') begrenzt, wobei das Wärmeübertragerelement (225; 225') mit einer Außenseite (220b; 220b) des Außenmantels (220; 220') verbunden ist, und wobei der elektromagnetisch transparente Abschnitt durch ein Bodenelement (230; 230') definiert wird, das den unteren Abschnitt (2151; 2151') der Vertiefung (215; 215') des Schüsselbehälters (110; 110') begrenzt, die gestaltet ist, die Schüssel (115) mindestens teilweise aufzunehmen.

3. Nahrungsmittelverarbeitungsvorrichtung (100) nach Anspruch 1, wobei das Bodenelement (230; 230') aus einem Material hergestellt ist, das mindestens für variable elektromagnetische Felder transparent ist, die eine Feldfrequenz aufweisen, die von 10 kHz bis 100 kHz reicht.

4. Nahrungsmittelverarbeitungsvorrichtung (100) nach Anspruch 1 oder 2, wobei das induktive Heizelement (235; 235') mit einer Außenseite (230b; 230b') des Bodenelements (230; 230') gegenüber einer Innenseite (230a; 230a') desselben verbunden ist, wobei die Innenseite (230a; 230a') des Bodenelements (230; 230') der Vertiefung (215; 215') des Schüsselbehälters (110; 110') zugewandt ist.

5. Nahrungsmittelverarbeitungsvorrichtung (100) nach einem der vorhergehenden Ansprüche, wobei eine Innenseite (220a; 220a')des Außenmantels (220; 220') gegenüber der Außenseite (220b; 220b') desselben so geformt ist, dass sie mindestens teilweise an eine Seitenwand (115a) der Schüssel (115) angepasst wird.

6. Nahrungsmittelverarbeitungsvorrichtung (100) nach einem der vorhergehenden Ansprüche, wobei das Wärmeübertragerelement (225; 225') eine Röhre (225; 225') umfasst, die um die Außenseite (220b; 220b') des Außenmantels (220; 220') gewickelt ist, wobei die Röhre ein Verdampferabschnitt eines Kühlsystems ist.

7. Nahrungsmittelverarbeitungsvorrichtung (100) nach einem der vorhergehenden Ansprüche, wobei der Schüsselbehälter (110, 110') außerdem einen Temperatursensor (240; 240') umfasst, der gestaltet ist, um eine Temperaturinformation bereitzustellen, die sich auf eine Temperatur der Nahrungsmittel und/oder der Nahrungsmittelzutaten bezieht, die in der Schüssel (115) gespeichert sind.

8. Nahrungsmittelverarbeitungsvorrichtung (100) nach Anspruch 7, wobei der Temperatursensor (240; 240') ein Sensorende (240a; 240a') umfasst, das gestaltet ist, in einem direkten Kontakt mit der Schüssel (115) zu stehen, wenn diese in die Vertiefung (215; 215') des Schüsselbehälters (110; 110') eingesetzt ist.

9. Nahrungsmittelverarbeitungsvorrichtung (100) nach Anspruch 7, wobei der Temperatursensor (240') in einer Weise mit dem Außenmantel (220') verbunden ist, dass das Sensorende (240a') im Wesentlichen bündig mit einer Innenseite (220a') des Außenmantels (220') ist und der Vertiefung (215') des Schüsselbehälters (110') zugewandt ist.

10. Nahrungsmittelverarbeitungsvorrichtung (100) nach einem der vorhergehenden Ansprüche, das außerdem ein bewegliches Element (405) umfasst, das gestaltet ist, den Schüsselbehälter (110, 110') und den Armabschnitt (105_{ARM}) relativ zueinander aus einer Beladeposition, die ein Einsetzen der Schüssel (115) in den Schüsselbehälter (110) erlaubt, in eine Betriebsposition zu bewegen, die eine effektive Wechselwirkung des Nahrungsmittelverarbeitungswerkzeugs mit den Nahrungsmitteln und/oder den Nahrungsmittelzutaten in der Schüssel (115) erlaubt.

11. Nahrungsmittelverarbeitungsvorrichtung (100) nach Anspruch 9, wobei die Nahrungsmittelverarbeitungsvorrichtung (100) außerdem ein Stoppbauteil (410) umfasst, das gestaltet ist, die relative Bewegung des Schüsselbehälters und des Armabschnitts zu stoppen, wenn die Schüssel (115) in die Vertiefung (215; 215) des Schüsselbehälters (110; 110') eingesetzt wird, und wobei sich der Schüsselbehälter (110; 110') und die Schüssel (115) in der Betriebsposition befinden, die eine effektive Wechselwirkung des Nahrungsmittelverarbeitungswerkzeugs mit den in der Schüssel (115) enthaltenen Nahrungsmitteln und/oder den Nahrungsmittelzutaten erlaubt.

12. Nahrungsmittelverarbeitungsvorrichtung (100) nach Anspruch 11, wobei das Stoppbauteil (410) ein Stopperelement (415) umfasst, wobei das Stopperelement gestaltet ist, mit einem Randabschnitt (115d) der Schüssel (115) in Kontakt zu treten, wenn diese sich in der Betriebsposition innerhalb des Schüsselbehälters (110; 110') befindet.

13. Nahrungsmittelverarbeitungsvorrichtung (100) nach Anspruch 12, wobei das Stopperelement (415) aus einem elastischen Material hergestellt ist, um Schäden an dem Rand (115d) der Schüssel (115) zu vermeiden, wenn das Stopperelement (415) mit dem Rand (115d) der Schüssel (115) in Kontakt tritt.

14. Nahrungsmittelverarbeitungsvorrichtung (100) nach einem der vorhergehenden Ansprüche, das außerdem ein Blockiersystem (300) zum Blockieren der Schüssel (115) in dem Schüsselbehälter (110; 110') umfasst, wobei das Blockiersystem (300) zwei oder mehr Blockierelemente (305a, 305b) umfasst, die an der Seitenfläche (205c; 205c') des Schüsselbehälters (110; 110') bereitgestellt werden, wobei jedes Blockierelement (305a, 305b) gestaltet ist, in einer Blockierkonfiguration des Blockiersystems (300) in die Schüssel (115) einzugreifen, wobei das Blockiersystem (300) in der Blockierkonfiguration die Schüssel (115) in Kontakt mit einer Oberfläche der Vertiefung (215; 215') des Schüsselbehälters (110; 110') hält.

15. Nahrungsmittelverarbeitungsvorrichtung (100) nach Anspruch 14, wobei die mindestens zwei Blockierelemente (305a, 305b) jeweils umfassen: einen jeweiligen Rahmen (310a, 310b) der an eine Seitenfläche (205c; 205') des Schüsselbehälters (110; 110') montiert ist, ein jeweiliges Griffelement (315a, 315b), das drehbar mit dem jeweiligen Rahmen (310a, 310b) verbunden ist, und ein jeweiliges Eingriffelement (320a, 320b), das drehbar mit dem jeweiligen Griffelement (315a, 315b) verbunden ist.

## Revendications

1. Appareil de traitement d'aliments (**100**) pour traiter des aliments et/ou des ingrédients alimentaires, l'appareil de traitement d'aliments comprenant un corps (**105**) ayant une partie élément (**105_{COMP}**) conçue pour contenir au moins une partie des éléments qui permettent le fonctionnement et la commande de l'appareil de traitement d'aliments (**100**), une partie bras (**105_{ARM}**) comprenant un élément d'actionnement (**135**) conçu pour actionner un outil de traitement d'aliments, et un contenant formant bol (**110** ; **110'**) conçu pour contenir une partie d'un bol (**115**) pour recevoir les aliments et/ou les ingrédients alimentaires qui doivent être traités, le contenant formant bol (**110, 110'**) comprenant un élément de chauffage par induction (**235 ; 235'**) permettant de chauffer les aliments et/ou les ingrédients alimentaires contenus dans le bol (**115**),
**caractérisé en ce que**
le contenant formant bol (**110 ; 110**) comprend en outre :
une partie thermoconductrice (**220 ; 220'**) conçue pour venir en contact avec un bol (**115**) ;
un élément échangeur de chaleur (**225 ; 225'**) couplé à la partie thermoconductrice (**220 ; 220'**) et
une partie transparente électromagnétique (**230 ; 230'**),
et **en ce que**
l'élément de chauffage par induction (**235 ; 235'**) est disposé sous ladite partie transparente électromagnétique inférieure (**230 ; 230'**).

2. Appareil de traitement d'aliments (**100**) selon la revendication 1, dans lequel la partie thermoconductrice est définie par une chemise (**220 ; 220'**) délimitant une partie supérieure (**215u ; 215u'**) d'un évidement (**215** ; **215'**) du contenant formant bol (**110 ; 110'**) et un orifice (**210 ; 210'**) de cette dernière pour l'insertion du bol (**115**) dans l'évidement (**215 ; 215'**), dans lequel l'élément échangeur de chaleur (**225 ; 225'**) est couplé à une surface externe (**220b ; 220b**) de la chemise (**220** ; **220'**) et dans lequel la partie transparente électromagnétique est définie par un élément de fond (**230 ; 230'**) qui délimite une partie inférieure (**2151 ; 2151'**) de l'évidement (**215 ; 215'**) du contenant formant bol (**110 ; 110'**) qui est conçue pour recevoir au moins partiellement le bol (**115**).

3. Appareil de traitement d'aliments (**100**) selon la revendication 1, dans lequel l'élément de fond (**230 ; 230'**) est réalisé en un matériau transparent à au moins des champs électromagnétiques variables ayant une fréquence de champ variant entre 10 kHz et 100 kHz.

4. Appareil de traitement d'aliments (**100**) selon la revendication 1 ou 2, dans lequel l'élément de chauffage par induction (**235 ; 235'**) est couplé à une surface externe (**230b ; 230b'**) de l'élément de fond (**230 ; 230'**) opposée à une surface interne (**230a ; 230a'**) de ce dernier, ladite surface interne (**230a ; 230a'**) de l'élément de fond (**230 ; 230'**) faisant face à l'évidement (**215 ; 215'**) du contenant formant bol (**110 ; 110'**).

5. Appareil de traitement d'aliments (**100**) selon l'une quelconque des revendications précédentes, dans lequel une surface interne (**220a ; 220a'**) de la chemise (**220 ; 220'**) opposée à la surface externe (**220b ; 220b'**) de cette dernière est formée de sorte à être fixée au moins partiellement par une paroi latérale (**115a**) dudit bol (**115**).

6. Appareil de traitement d'aliments (**100**) selon l'une quelconque des revendications précédentes, dans lequel ledit élément échangeur de chaleur (**225 ; 225'**) comprend un tuyau (**225 ; 225'**) enroulé autour de la surface externe (**220b ; 220b'**) de la chemise (**220 ; 220'**), ledit tuyau (**225 ; 225'**) étant une partie évaporateur d'un système de réfrigération.

7. Appareil de traitement d'aliments (**100**) selon l'une quelconque des revendications précédentes, dans lequel le contenant formant bol (**110, 110'**) comprend en outre un capteur de température (**240 ; 240'**) conçu pour fournir une information de température se rapportant à une température des aliments et/ou des ingrédients alimentaires stockés dans le bol (**115**).

8. Appareil de traitement d'aliments (**100**) selon la revendication 7, dans lequel le capteur de température (**240 ; 240')** comprend une extrémité de détection (**240a ; 240a'**) conçue pour venir directement en contact avec le bol (**115**) lorsque ce dernier est inséré dans l'évidement (**215 ; 215'**) du contenant formant bol (**110 ; 110'**).

9. Appareil de traitement d'aliments (**100**) selon la revendication 7, dans lequel le capteur de température (**240'**) est couplé à la chemise (**220'**) de telle manière que l'extrémité de détection (**240a'**) soit sensiblement de niveau avec une surface interne (**220a'**) de la chemise (**220'**) et soit orientée vers l'évidement (**215'**) du contenant formant bol (**110'**).

10. Appareil de traitement d'aliments (**100**) selon l'une quelconque des revendications précédentes, comprenant en outre un élément mobile (**405**) conçu pour déplacer le contenant formant bol (**110 ; 110**) et la partie bras (**105_{ARM}**) l'un par rapport à l'autre à partir d'une position de chargement qui permet une insertion du bol (**115**) dans le contenant formant bol (**110**), jusqu'à une position de fonctionnement qui permet une interaction efficace de l'outil de traitement d'aliments avec les aliments et/ou les ingrédients alimentaires contenus dans le bol (**115**).

11. Appareil de traitement d'aliments (**100**) selon la revendication 9, dans lequel l'appareil de traitement d'aliments (**100**) comprend une partie d'arrêt (**410**) conçue pour arrêter ledit mouvement relatif du contenant formant bol et la partie bras lorsque le bol (**115**) est inséré dans l'évidement (**215 ; 215**) du contenant formant bol (**110 ; 110'**) et le contenant formant bol (**110 ; 110'**) et le bol (**115**) se trouvent dans la position de fonctionnement qui permet une interaction efficace de l'outil de traitement d'aliments avec les aliments et/ou les ingrédients alimentaires contenus dans le bol (**115**).

12. Appareil de traitement d'aliments (**100**) selon la revendication 11, dans lequel la partie d'arrêt (**410**) comprend un élément de butée (**415**), ledit élément de butée étant conçu pour venir en contact avec au moins une partie d'un rebord (**115d**) du bol (**115**) lorsque ce dernier se trouve dans la position de fonctionnement dans le contenant formant bol (**110 ; 110'**).

13. Appareil de traitement d'aliments (**100**) selon la revendication 12, dans lequel l'élément de butée (**415**) est réalisé en un matériau élastique pour empêcher des dégâts au rebord (**115d**) du bol (**115**) lorsque l'élément de butée (415) est en contact avec le rebord (**115d**) du bol (**115**).

14. Appareil de traitement d'aliments (**100**) selon l'une quelconque des revendications précédentes, comprenant en outre un système de blocage (**300**) pour bloquer le bol (**115**) dans le contenant formant bol (**110 ; 110'**), le système de blocage (**300**) comprenant au moins deux éléments de blocage (**305a, 305b**) disposés sur la surface latérale (**205c ; 205c'**) du contenant formant bol (**110** ; **110'**), chaque élément de blocage (**305a, 305b**) étant conçu pour venir en prise avec le bol (**115**) dans une configuration de blocage du système de blocage (**300**), le système de blocage (**300**) dans la configuration de blocage maintenant le bol (**115**) en contact avec une surface de l'évidement (**215** ; **215'**) du contenant formant bol (**110** ; **110'**).

15. Appareil de traitement d'aliments (**100**) selon la revendication 14, dans lequel les deux, ou plus, éléments de blocage (**305a, 305b**) comprennent chacun un cadre respectif (**310a, 310b**) monté sur une surface latérale (**205c ; 205c'**) du contenant formant bol (**110 ; 110'**), un élément de poignée respectif (**315a, 315b**) couplé en rotation avec le cadre respectif (**310a, 310b**) et un élément de mise en prise respectif (**320a, 320b**) couplé en rotation avec l'élément de poignée respectif (**315a, 315b**).
